# EUROPÄISCHE PATENTSCHRIFT

(11) **EP 2 317 840 B1**
(45) Veröffentlichungstag und Bekanntmachung des Hinweises auf die Patenterteilung: **23.07.2014**
(21) Anmeldenummer: 09778151.2
(22) Anmeldetag: 27.08.2009
(51) Int. Cl.: A01K 63/00, A01K 63/04

(54) **Klimaverbesserer für Teiche sowie Teichfiltersystem**
Climate improver for ponds, and pond-filter system
Dispositif d'amélioration de l'environnement pour pièces d'eau, et système de filtre pour pièces d'eau

(30) Priorität: 29.08.2008 DE 102008044949
(43) Veröffentlichungstag der Anmeldung: 11.05.2011
(73) Patentinhaber: Oase GmbH, 48477 Hörstel-Riesenbeck (DE)
(72) Erfinder: LORENZ, Michaela, 48432 Rheine (DE); WAGNER, Utz, 48155 Münster (DE)
(74) Vertreter: Busse & Busse
(86) Internationale Anmeldenummer: PCT/EP2009/006213
(87) Internationale Veröffentlichungsnummer: WO 2010/022943

(56) Entgegenhaltungen:
- CN-Y- 2 178 047
- DE-A1- 10 116 708
- US-A1- 2006 070 948
- US-A1- 2007 267 344

## Beschreibung

Die Erfindung betrifft einen Klimaverbesserer für Teiche nach dem Oberbegriff des Anspruchs 1 sowie ein Teichfiltersystem mit einem entsprechenden Klimaverbesserer.

Aus der Praxis sind diverse Teichfilter und entsprechende Systeme bekannt, die im wesentlichen eine Teichreinigung und Wasserfilterung vornehmen und damit das im Teich herrschende Klima beeinflussen. Aus der EP 0 942 646 B1 bzw. der entsprechenden deutschen Übersetzung DE 698 32 959 T2 ist künstliches Seegras bekannt, das in Fischhälterungsbecken, Aquarien aber auch Teichen zum Einsatz kommen kann und Fasern aufweist, die eine Besiedelungsoberfläche für Bakterien bilden. Beim Einsatz dieses künstlichen Seegrases in Aquarien kann es wie in diesem Dokument beschrieben auch zu einer Kombination mit einem Blasenerzeuger kommen, vom dem Luftblasen aufsteigen. Das vorbekannte künstliche Seegras vermag zwar auch eine Verbesserung des Gewässerklimas zu bewirken, jedoch dient es vornehmlich dazu, Fischen Schutz zu bieten und Algenwachstum zu begünstigen, die den dort gehaltenen Fischen als Nahrung dienen können. Eine ähnliche Schutzwirkung könnte durch einen "Faservorhang" erreicht werden, wie er gemäß US 2007/0267344 vorgeschlagen wird. Zwischen diesen aus Fasern an einem Haltedraht gebildeten "Vorhängen" sind die Belüftungselemente weitgehend einseitig angeordnet und zur Verwirbelung ist eine propellerartige Zusatzeinrichtung vorgesehen. In CN 2178047 erfolgt die Belüftung bzw. Umwälzung des Wassers durch eine an der Behälterwandung aufsteigende Strömung, wobei diese dann von oben auf jeweilige in einer Tragplatte am Boden des Aquariums gehaltene Pflanzen zurückgeleitet wird.

Der Erfindung liegt die Aufgabe zugrunde, einen Klimaverbesserer für Teiche bzw. ein entsprechendes Teichfiltersystem zu schaffen, das auf einfachere Weise eine großräumigere positive Klimaveränderung des Teiches bewirken kann.

Diese Aufgabe wird durch einen erfindungsgemäßen Klimaverbesserer mit den Merkmalen des Anspruchs 1 bzw. ein Teichfiltersystem mit einem derartigen Klimaverbesserer entsprechend Anspruch 18 gelöst. Durch die Auslegung und den Einsatz des Belüftungselementes zur Erzeugung einer Wasserströmung entlang der Fasern nach oben, übt der Klimaverbesserer in seinem Umfeld vor allem im unteren Bereich weiträumig einen Wassersog aus, der zu einer großvolumigen Umwälzung des Teichwassers führt, so daß in kurzer Zeit sehr viel Wasser mit den bakterienbesiedelten Fasern des Klimaverbesserers in Kontakt treten. Dadurch hat der Klimaverbesserer gleichzeitig eine hohe Filter- und Umwälzleistung, so daß der gesamte Teich belüftet und aktiviert wird. Der Abbau von Schadstoffen, insbesondere von Nitrit und Nitrat sowie der Nährstoffabbau wird optimiert. Der Klimaverbesserer ist besonders wirkungsvoll, wenn die vom Belüftungselement abgegebene Luftmenge im Verhältnis zu dessen Fläche 50 groß ausgelegt ist, daß eine Wasserströmung mit einer Mindestgeschwindigkeit von 3,5 mm/s erreicht wird. Bevorzugt liegt die zu erreichende Wasserströmungsgeschwindigkeit zwischen 5 mm/s und 20 mm/s, insbesondere bei etwa 10 mm/s.

Der Klimaverbesserer kann ausschließlich mit Luftzufuhr, d.h. ohne Stromeinbringung in dem Teich betrieben werden, so dass elektrische Gefahren von vornherein ausgeschlossen werden.

Um einen optimalen Schadstoffabbau bei dem entsprechenden Luft- und Wassermengendurchsatz zu erreichen, sollte der Klimaverbesserer an seinen Fasern eine Besiedelungsoberfläche von mindestes 5 m²/ dm² der Fläche der Faserhalterung aufweisen. Vorzugsweise liegt die Größe der Besiedelungsoberfläche zwischen 8 m²/dm² und 15 m²/dm² ,insbesondere bei ca. 11 m²/ dm² Fläche der Faserhalterung. Außer durch die Anzahl der verwendeten Fasern läßt sich die Größe der Besiedelungsoberfläche insbesondere von der Faserlänge, dem Faserdurchmesser und dem Faserquerschnitt beeinflussen. Dieser muß nicht rund sein, sondern kann verschiedene unrunde Formen, beispielsweise Kreuzform, Sternform oder andere vorzugsweise extrudierbar bestellbare Querschnittformen aufweisen.

Es hat ebenfalls Einfluß auf die Größe der Besiedelungsoberfläche, ob gerade Fasern oder solche verwendet werden, die leicht oder stärker gewellt sind. Es können dabei auch unterschiedliche Fasern, auch solche unterschiedlicher Dicke, miteinander in dem erfindungsgemäßen Klimaverbesserer kombiniert werden. Da die aufsteigenden Luftblasen und der dadurch verursachte Wasserstrom zu einer Bewegung der bevorzugt am unteren Ende gehaltenen und sich nach oben erstreckenden Fasern führt, kann die Verwendung unterschiedlicher Fasern, z.B. mit verschiedenen Wellungen, den Fasern ebenfalls unterschiedliche Schwingverhalten geben, wodurch das Gesamtbild der Faserhalterung mit Fasern ein sehr natürliches, pflanzenähnliches Aussehen erhält. Das natürliche Aussehen kann auch durch unterschiedliche Färbung der Fasern begünstigt werden. Bevorzugt haben die Fasern eine durchschnittliche Dicke von 0,3 bis 1 mm, insbesondere zwischen 0,5 und 0,8 mm.

Im Gegensatz zum Seegras des Standes der Technik sind für den erfindungsgemäßen Klimaverbesserer Fasern mit einer Oberfläche möglichst geringer Porosität bevorzugt, da diese zwar eine Bakterienansiedlung, nicht aber eine Algenbildung forcieren sollen. Solche Fasern können beispielsweise aus Polypropylen oder einem anderen, nicht Wasser aufnehmenden Kunststoff bestehen. Sollten sich an diesen Fasern beispielsweise doch Fadenalgen oder ähnlicher Bewuchs ansiedeln, kann dieser zur Reinigung der Fasern einfach ausgekämmt werden.

Weitere Vorteile und Einzelheiten des erfindungsgemäßen Klimaverbesserers ergeben sich aus den übrigen Unteransprüchen und einem Ausführungsbeispiel der Erfindung, das im Folgenden beschrieben wird; es zeigen:
- Fig. 1: einen Klimaverbesserer für Teiche in perspektivischer Ansicht,
- Fig. 2: den Gegenstand aus Fig. 1, nur teilweise mit Fasern bestückt und mit einer Ausschnittvergrößerung und
- Fig. 3: einen mittigen Längsschnitt durch den Gegenstand aus Fig. 1.

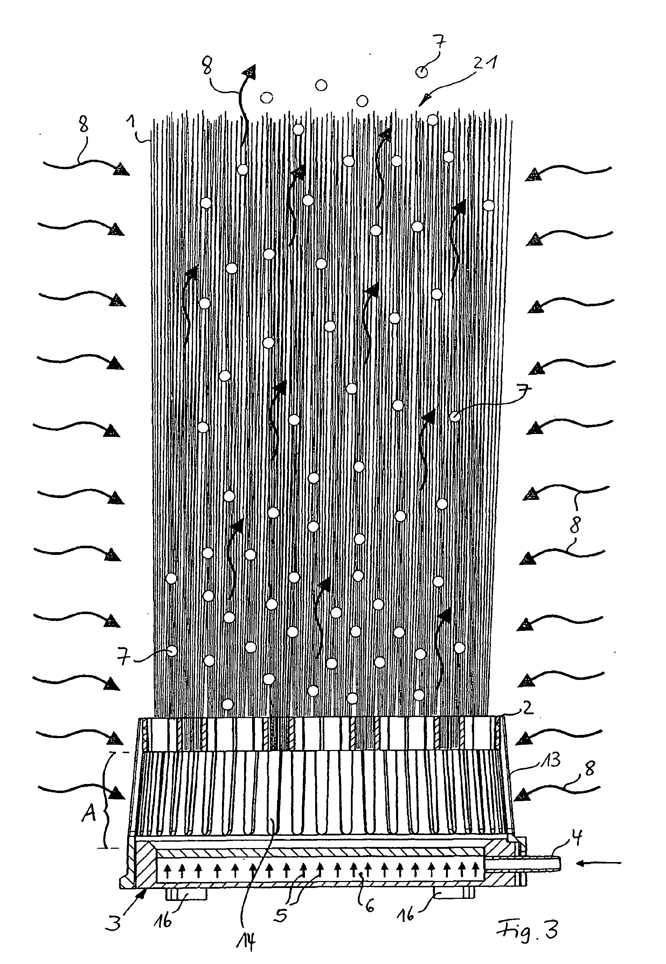

Der dargestellte Klimaverbesserer hat eine Vielzahl von Fasern 1, die bevorzugt in einer Faserhalterung 2 gehalten sind. Ein Belüftungselement 3 ist wie in Fig. 3 erkennbar vorzugsweise unterhalb des Faserhalters 2 angeordnet. Das dargestellte Belüftungselement 3 hat einen Luftanschluß 4, über den es beispielsweise von einer nicht dargestellten Belüfterpumpe mit Frischluft versorgt wird. Die Luft wird in dem vorzugsweise wie dargestellt plattenförmig ausgebildeten Belüftungselement 3 verteilt und nach oben geleitet, wie es die kleinen senkrecht stehenden Pfeile 5 andeuten. Eine solch gleichmäßige Luftabgabe nach oben kann besonders gut dadurch bewirkt werden, wenn das Belüftungselement 3 einen porösen Sprudelstein 6 aufweist.

Die aufsteigende Luft, die weiter oberhalb durch Luftblasen 7 veranschaulicht ist, streicht entlang der Fasern 1 nach oben und erzeugt dabei durch die Menge und Geschwindigkeit der Luftblasen einen Sog, der Wasser, symbolisiert durch geschwungene Pfeile 8, mitsaugt. Es ist von Vorteil, wenn sich das Wasser 8 möglichst lang entlang der Fasern nach oben bewegt und wenn möglichst viel Wasser durch den Klimaverbesserer umgewälzt wird. Dies wird durch eine Vielzahl erfindungsgemäßer Merkmale bewirkt, die jeweils einzeln Vorteile erbringen, sich in Kombination jedoch optimal ergänzen.

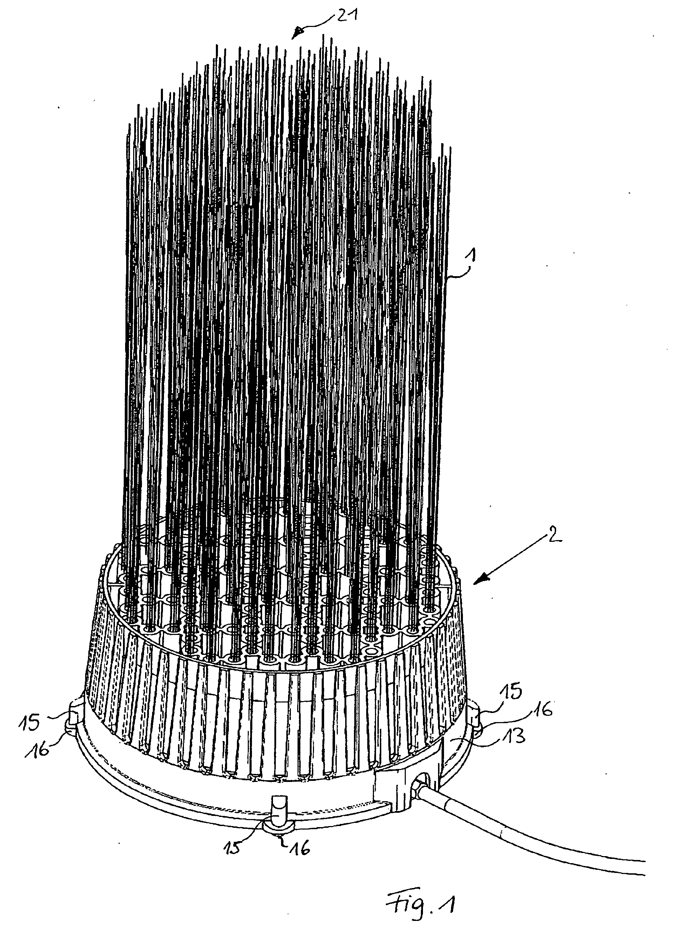

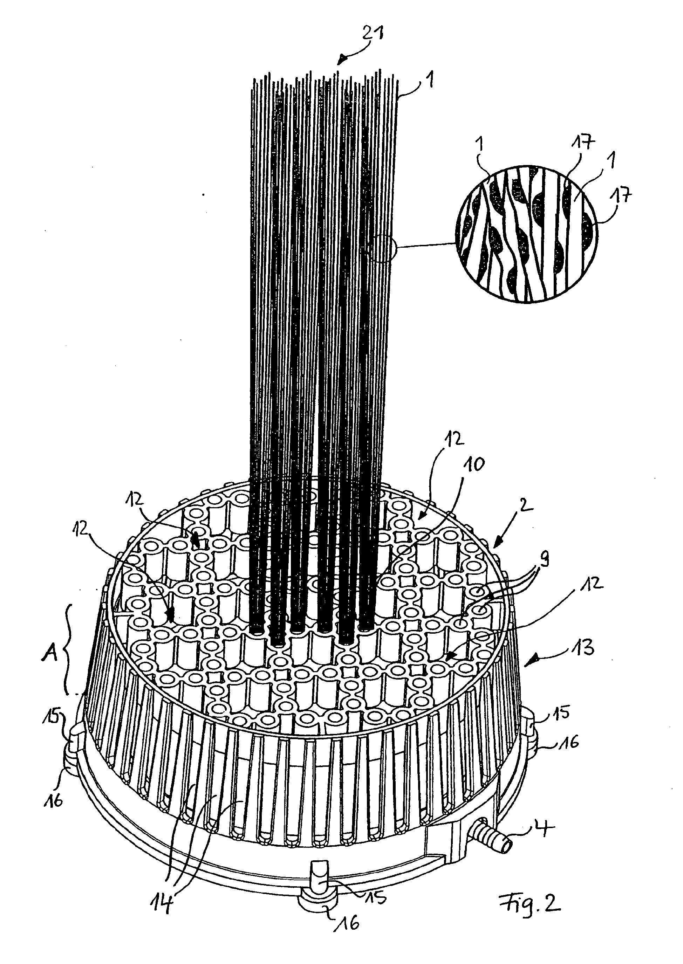

So hat die Faserhalterung 2, wie insbesondere in den Fig. 1 und 2 zu erkennen ist, einzelne Aufnahmebereiche 9 für komplette Faserbündel 10, die dort zur fertigungstechnischen Vereinfachung nach Art von Borstenbündeln einer Bürste eingestanzt sein können. Zwischen den Aufnahmebereichen 9 für die Faserbündel 10 befinden sich bevorzugt Durchtrittsöffnungen 12 für Luft und Wasser. Die Faserhalterung 2 kann wie dargestellt in einem Gehäuse 13, insbesondere wie bei dem Ausführungsbeispiel mit diesem einstückig ausgebildet sein. Um bereits im unteren Bereich möglichst viel Wasser ansaugen und mitnehmen zu können, bildet das Gehäuse 13 einen Abstandsbereich A zwischen dem Belüftungselement 3 und der Faserhalterung 2 aus. Diese hat bevorzugt eine Vielzahl von Wassereintrittsöffnungen 14, die wie dargestellt schlitzartig sein können. Durch diese Wassereintrittsöffnungen 14 strömt von den aufsteigenden Luftblasen 7 angezogen Wasser in den Zwischenraum zwischen dem Belüftungselement 3 und der Faserhalterung 2 und steigt zusammen mit den Luftblasen 7 durch die Durchtrittsöffnungen 2 nach oben und entlang der Fasern auf, wodurch sich eine starke Umwälzströmung entwickelt. Diese nimmt über die gesamte Faserlänge zeitlich noch Wasser mit, was durch die Vielzahl der Pfeile 8 verdeutlicht ist.

Um den funktionalen Zusammenhang und die einfache Plazierung im Teich zu gewährleisten, ist das Belüftungselement 3 wie bei der dargestellten Ausführungsform mit der Faserhalterung 2 (hier über das Gehäuse 13) verbunden. Bei dem Ausführungsbeispiel ist das Gehäuse 13 über domartige Ansätze 15 mit Standfüßen 16 verschraubt, die die Unterseite des Belüftungselementes 3 halten und dieses gegen ein Widerlager im Gehäuse 13 drücken. So sind bei der dargestellten Ausführungsform das Belüftungselement 3 und die Faserhalterung 2 mit den Fasern 1 in einem Gerät vereint.

Die Detailvergrößerung in Fig. 2 zeigt, wie an den Fasern 2 Bakterien 17 angesiedelt sind. Diese erwünschte Bakterienansiedlung bildet sich zwar in Betrieb des Klimaverbesserers automatisch aus, kann jedoch auch vor Inbetriebnahme durch eine sogenannte Impfung forciert werden. Dazu ist der Klimaverbesserer in ein eimerähnliches, wassergefülltes Gefäß zu setzen, dem ein Starterpaket mit Bakterien zugegeben wird. Ein solches Starterpaket kann bevorzugt im Set mit dem Klimaverbesserer vertrieben werden. Ohne daß der Luftanschluß 4 bereits funktionsgemäß angeschlossen zu sein braucht, bildet sich in dem Gefäß an den Fasern 1 innerhalb einer vorgegebenen Zeit dann eine Erstbesiedlung mit Bakterien 17 aus. Der Klimaverbesserer kann dann mit der Erstbesiedelung an seinem gewünschten Standort im Teich eingesetzt werden.

Bevorzugt sind die Aufnahmebereiche 9 für die Faserbündel 10 so eng gehalten, daß die Aufnahmebereiche 9 im wesentlichen sauerstofffrei sind und sich dort anaerobe Besiedlungszonen ausbilden, während die überwiegende freie Länge der Fasern 1 oberhalb der Aufnahmebereiche 9 von aeroben Bakterien besiedelt wird. Durch eine derartige Besiedlung können auf vorteilhafte Weise mit dem Klimaverbesserer unterschiedliche, sich jedoch ergänzende Filterwirkungen ausgeübt werden. Zusätzlich kann die Oberseite 21 der Fasern 1 als Laichbürste für etwaigen Fischbesatz fungieren.

Es ist möglich, auf den Rand der Faserhalterung 2 einen beidseitig offenen Zylinder aufzusetzen. Dieser führt dazu, daß kein Wasser mehr von den Seiten angesaugt und mitgerissen wird, sondern ausschließlich durch die Wassereintrittsöffnungen 14 des Gehäuses 13. Es ergibt sich dadurch eine leicht geänderte Umwälzwirkung, die in bestimmten Teichbereichen erwünscht sein kann.

Bevorzugt kommt der erfindungsgemäße Klimaverbesserer in einem Gesamtsystem zur Teichfilterung bzw. -reinigung zum Einsatz. Zunächst ist der Klimaverbesserer mit einer Belüfterpumpe zu kombinieren, die auch integraler Bestandteil des Klimaverbesserers sein kann. Ergänzend kann ein weiterer Wasserfilter in dem Teichfiltersystem zum Einsatz kommen, wobei der Wasserfilter in der Regel eine Wasserpumpe aufweist oder von einer solchen betrieben wird und meist über herkömmliche Filterschwämme verfügt. Auch die Kombination mit einem Oberflächenabsauger, insbesondere bei Teichen, die einem erhöhten Schmutzeintrag von oben, beispielsweise durch Laub, ausgesetzt sind, kann sinnvoll sein. Zudem kann das Teichfiltersystem eine Entkeimungs- und Sterilisierungslampe, z.B. einen UVC, aufweisen, in dem beispielsweise Algen abgetötet werden, die dann verklumpen und ausflocken und/oder ausgefiltert werden können. Der UVC kann auch an den Klimaverbesserer angekoppelt werden. Beispielweise kann eine Wasserpumpe mit einem UVC ein bestimmtes, vorbehandeltes Wasservolumen zwischen dem Belüftungselement 3 und der Faserhalterung 2 zugeleitet werden. Jedes der genannten Einzelelemente kann mit dem Klimaverbesserer ein für den Einzelfall geeignetes Teichfiltersystem ergeben. In den überwiegenden Fällen wird jedoch eine optimale Filter- und Reinigungswirkung erreicht, wenn der Klimaverbesserer mit einem zusätzlichen Wasserfilter mit Pumpe, einem Oberflächenabsauger und einer Entkeimungslampe kombiniert wird.

## Patentansprüche

1. Klimaverbesserer für Teiche mit Fasern (1), die eine Besiedlungsoberfläche für Bakterien (17) bilden, und einem Belüftungselement(3) zur Luftzufuhr, **dadurch gekennzeichnet, dass** das Belüftungselement (3) zur Erzeugung einer Wasserströmung entlang der Fasern (1) nach oben ausgelegt ist und das Belüftungselement (3) mit einer Aufnahmebereiche (9) für Faserbündel (10) aufweisenden Faserhalterung (2) verbunden ist.

2. Klimaverbesserer nach Anspruch 1, **dadurch gekennzeichnet, dass** das Belüftungselement (3) zur Erzeugung einer vorgegebenen Luftmenge pro Fläche ausgelegt ist, so dass die Wasserströmung eine Mindestgeschwindigkeit von 3,5 mm/s, bevorzugt zwischen 5 mm/s und 20 mm/s aufweist.

3. Klimaverbesserer nach einem der vorhergehenden Ansprüche, **dadurch gekennzeichnet, dass** das Belüftungselement (3) und die Faserhalterung (2) mit Fasern (1) in einem Gerät vereint sind.

4. Klimaverbesserer nach einem der Ansprüche 1 bis 3, **dadurch gekennzeichnet, dass** zwischen den Aufnahmebereichen (9) für Faserbündel (10) Luft-/Wasserdurchtrittsöffnungen (12) sind.

5. Klimaverbesserer nach einem der Ansprüche 1 bis 4, **dadurch gekennzeichnet, dass** die Faserbündel (10) in den Aufnahmebereichen (9) so eng gehalten sind, dass sich dort anaerobe Besiedlungszonen ausbilden.

6. Klimaverbesserer nach einem der vorhergehenden Ansprüche, **dadurch gekennzeichnet, dass** die Faserhalterung (2) in einem Gehäuse (13) ausgebildet ist.

7. Klimaverbesserer nach Anspruch 6, **dadurch gekennzeichnet, dass** die Faserhalterung (2) mit dem Gehäuse (13) einstückig ausgebildet ist.

8. Klimaverbesserer nach Anspruch 6 oder 7, **dadurch gekennzeichnet, dass** das Gehäuse (13) einen Abstandsbereich (A) zwischen dem Belüftungselement (3) und der Faserhalterung (2) aufweist.

9. Klimaverbesserer nach Anspruch 8, **dadurch gekennzeichnet, dass** der Abstandsbereich (A) Wassereintrittsöffnungen (14) aufweist.

10. Klimaverbesserer nach einem der vorhergehenden Ansprüche, **dadurch gekennzeichnet, dass** die Fasern (1) zumindest teilweise gewellt sind.

11. Klimaverbesserer nach einem der vorhergehenden Ansprüche, **gekennzeichnet durch** Fasern (1) unterschiedlicher Dicken.

12. Klimaverbesserer nach einem der vorhergehenden Ansprüche, **gekennzeichnet durch** Fasern (1) mit unrundem Querschnitt.

13. Klimaverbesserer nach einem der vorhergehenden Ansprüche, **dadurch gekennzeichnet, dass** das Belüftungselement (3) unter den Fasern (1) angeordnet ist.

14. Klimaverbesserer nach einem der vorhergehenden Ansprüche, **dadurch gekennzeichnet, dass** er eine Besiedlungsoberfläche von mindestens 5 m²/dm² Faserhalterung (2), vorzugsweise zwischen 8 m²/dm² und 15 m²/dm² Faserhalterung (2) aufweist.

15. Klimaverbesserer nach einem der vorhergehenden Ansprüche, **dadurch gekennzeichnet, dass** das Belüftungselement (3) zumindest im wesentlichen plattenförmig ausgebildet ist.

16. Klimaverbesserer nach einem der vorhergehenden Ansprüche, **dadurch gekennzeichnet, dass** das Belüftungselement (3) einen porösen Sprudelstein (6) aufweist.

17. Klimaverbesserer nach einem der vorhergehenden Ansprüche, **dadurch gekennzeichnet, dass** das Belüftungselement (3) einen Luftanschluss (4) zur Verbindung mit einer Belüfterpumpe aufweist.

18. Teichfiltersystem, **gekennzeichnet durch** einen Klimaverbesserer nach einem der Ansprüche 1 bis 17 und eine Belüfterpumpe.

19. Teichfiltersystem nach Anspruch 18, **gekennzeichnet durch** einen Wasserfilter mit Wasserpumpe.

20. Teichfiltersystem nach Anspruch 18 oder 19, **gekennzeichnet durch** einen Oberflächenabsauger.

21. Teichfiltersystem nach einem der Ansprüche 18 bis 20, **gekennzeichnet durch** eine Entkeimungs- bzw. Sterilisierungslampe.

## Claims

1. Climate improver for ponds, comprising fibres (1), which form a colonisation surface for bacteria (17), and an aeration element (3) for supplying air, **characterised in that** the aeration element (3) is designed to face upwards in order to generate a flow of water along the fibres (1), and the aeration element (3) is connected to a region (9) for receiving a fibre holder (2) comprising fibre bundles (10).

2. Climate improver according to claim 1, **characterised in that** the aeration element (3) is designed to generate a predefined amount of air per unit of area so that the flow of water has a minimum speed of 3.5 mm/s, preferably of between 5 mm/s and 20 mm/s.

3. Climate improver according to any of the preceding claims, **characterised in that** the aeration element (3) and the fibre holder (2) comprising fibres (1) are combined in one device.

4. Climate improver according to any of claims 1 to 3, **characterised in that** there are air/water through-openings (12) between the regions (9) for receiving fibre bundles (10).

5. Climate improver according to any of claims 1 to 4, **characterised in that** the fibre bundles (10) are held so tightly in the receiving regions (9) that anaerobic colonisation zones form thereon.

6. Climate improver according to any of the preceding claims, **characterised in that** the fibre holder (2) is formed in a housing (13).

7. Climate improver according to claim 6, **characterised in that** the fibre holder (2) is integral with the housing (13).

8. Climate improver according to either claim 6 or claim 7, **characterised in that** the housing (13) has a spacing region (A) between the aeration element (3) and the fibre holder (2).

9. Climate improver according to claim 8, **characterised in that** the spacing region (A) has water inlet openings (14).

10. Climate improver according to any of the preceding claims, **characterised in that** the fibres (1) are undulated at least in part.

11. Climate improver according to any of the preceding claims, **characterised by** fibres (1) having different thicknesses.

12. Climate improver according to any of the preceding claims, **characterised by** fibres (1) having a non-circular cross section.

13. Climate improver according to any of the preceding claims, **characterised in that** the aeration element (3) is arranged under the fibres (1).

14. Climate improver according to any of the preceding claims, **characterised in that** it has a colonisation surface of at least 5 m²/dm² of fibre holder (2), preferably of between 8 m²/dm² and 15 m²/dm²of fibre holder (2).

15. Climate improver according to any of the preceding claims, **characterised in that** the aeration element (3) is designed to be at least substantially plate-shaped.

16. Climate improver according to any of the preceding claims, **characterised in that** the aeration element (3) comprises a porous air stone (6).

17. Climate improver according to any of the preceding claims, **characterised in that** the aeration element (3) comprises an air connection (4) for connecting to an aeration pump.

18. Pond filter system, **characterised by** a climate improver according to any of claims 1 to 17 and an aeration pump.

19. Pond filter system according to claim 18, **characterised by** a water filter comprising a water pump.

20. Pond filter system according to either claim 18 or claim 19, **characterised by** a surface skimmer.

21. Pond filter system according to any of claims 18 to 20, **characterised by** a germicidal or sterilisation lamp.

## Revendications

1. Dispositif d'amélioration climatique pour pièces d'eau avec des fibres (1) qui forment une surface de colonisation pour des bactéries (17), et un élément de ventilation (3) pour l'amenée d'air, **caractérisé en ce que** l'élément de ventilation (3) est configuré vers le haut pour la génération d'un écoulement d'eau le long des fibres (1) et l'élément de ventilation (3) est relié à un support de fibres (2) présentant des zones de réception (9) pour des faisceaux de fibres (10).

2. Dispositif d'amélioration climatique selon la revendication 1, **caractérisé en ce que** l'élément de ventilation (3) est configuré pour la génération d'une quantité d'air prescrite par surface de sorte que l'écoulement d'eau présente une vitesse minimale de 3,5 mm/s, comprise de préférence entre 5 et 20 mm/s.

3. Dispositif d'amélioration climatique selon l'une quelconque des revendications précédentes, **caractérisé en ce que** l'élément de ventilation (3) et le support de fibres (2) avec des fibres (1) sont réunis dans un appareil.

4. Dispositif d'amélioration climatique selon l'une quelconque des revendications 1 à 3, **caractérisé en ce que** des ouvertures de passage d'air/d'eau (12) sont situées entre les zones de réception (9) des faisceaux de fibres (10).

5. Dispositif d'amélioration climatique selon l'une quelconque des revendications 1 à 4, **caractérisé en ce que** les faisceaux de fibres (10) sont maintenus si serrés dans les zones de réception (9) que des zones de colonisation anaérobies s'y développent.

6. Dispositif d'amélioration climatique selon l'une quelconque des revendications précédentes, **caractérisé en ce que** le support de fibres (2) est réalisé dans un boîtier (13).

7. Dispositif d'amélioration climatique selon la revendication 6, **caractérisé en ce que** le support de fibres (2) est réalisé d'un seul tenant avec le boîtier (13).

8. Dispositif d'amélioration climatique selon la revendication 6 ou 7, **caractérisé en ce que** le boîtier (13) présente une zone d'écartement (A) entre l'élément de ventilation (3) et le support de fibres (2).

9. Dispositif d'amélioration climatique selon la revendication 8, **caractérisé en ce que** la zone d'écartement (A) présente des ouvertures d'entrée d'eau (14).

10. Dispositif d'amélioration climatique selon l'une quelconque des revendications précédentes, **caractérisé en ce que** les fibres (1) sont ondulées au moins en partie.

11. Dispositif d'amélioration climatique selon l'une quelconque des revendications précédentes, **caractérisé par** des fibres (1) d'épaisseurs différentes.

12. Dispositif d'amélioration climatique selon l'une quelconque des revendications précédentes, **caractérisé par** des fibres (1) de section transversale non ronde.

13. Dispositif d'amélioration climatique selon l'une quelconque des revendications précédentes, **caractérisé en ce que** l'élément de ventilation (3) est disposé sous les fibres (1).

14. Dispositif d'amélioration climatique selon l'une quelconque des revendications précédentes, **caractérisé en ce qu'**il présente une surface de colonisation d'au moins 5 m²/dm² du support de fibres (2), comprise de préférence entre 8 et 15 m²/dm² du support de fibres (2).

15. Dispositif d'amélioration climatique selon l'une quelconque des revendications précédentes, **caractérisé en ce que** l'élément de ventilation (3) est réalisé au moins sensiblement en forme de plaque.

16. Dispositif d'amélioration climatique selon l'une quelconque des revendications précédentes, **caractérisé en ce que** l'élément de ventilation (3) présente une pierre à fontaine (6) poreuse.

17. Dispositif d'amélioration climatique selon l'une quelconque des revendications précédentes, **caractérisé en ce que** l'élément de ventilation (3) présente une prise d'air (4) pour la liaison avec une pompe de ventilateur.

18. Système de filtre pour pièces d'eau, **caractérisé par** un dispositif d'amélioration climatique selon l'une quelconque des revendications 1 à 17 et une pompe de ventilateur.

19. Système de filtre pour pièces d'eau selon la revendication 18, **caractérisé par** un filtre à eau avec une pompe à eau.

20. Système de filtre pour pièce d'eau selon la revendication 18 ou 19, **caractérisé par** un aspirateur de surface.

21. Système de filtre pour pièce d'eau selon l'une quelconque des revendications 18 à 20, **caractérisé par** une lampe germicide ou stérilisatrice.
